(19) **Europäisches Patentamt / European Patent Office / Office européen des brevets**

(11) **EP 2 503 387 B1**

(12) # FASCICULE DE BREVET EUROPEEN

(45) Date de publication et mention
de la délivrance du brevet:
**15.01.2014 Bulletin 2014/03**

(51) Int Cl.:
***G02F 1/35*** (2006.01)   ***G02F 1/39*** (2006.01)

(21) Numéro de dépôt: **12161313.7**

(22) Date de dépôt: **26.03.2012**

(54) **Oscillateur paramétrique optique à cavités imbriquées pour le balayage rapide en fréquence**

Parametrischer optischer Oszillator mit überlappenden Hohlräumen für die frequenzabhängige Schnellabtastung

Optical parametric oscillator with overlapping cavities for quick frequency scanning

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.03.2011 FR 1100897**

(43) Date de publication de la demande:
**26.09.2012 Bulletin 2012/39**

(73) Titulaire: **OFFICE NATIONAL D'ETUDES ET DE RECHERCHES AEROSPATIALES (ONERA)**
**92320 Chatillon sous Bagneux (FR)**

(72) Inventeurs:
 • **Raybaut, Myriam**
  **91190 Gif S / Yvette (FR)**
 • **Hardy, Bertrand**
  **92340 Bourg la Reine (FR)**
 • **Godard, Antoine**
  **91120 Palaiseau (FR)**
 • **Lefebvre, Michel**
  **91400 Orsay (FR)**

(74) Mandataire: **Regimbeau**
**20, rue de Chazelles**
**75847 Paris Cedex 17 (FR)**

(56) Documents cités:
 • HARDY B ET AL: "Compact, single-frequency, doubly resonant optical parametric oscillator pumped in an achromatic phase-adapted double-pass geometry", OPTICS LETTERS, OSA, OPTICAL SOCIETY OF AMERICA, WASHINGTON, DC, US, vol. 36, no. 5, 1 mars 2011 (2011-03-01), pages 678-680, XP001560627, ISSN: 0146-9592, DOI: 10.1364/OL.36.000678 [extrait le 2011-02-24]
 • JOSEPH E SCHAAR ET AL: "Characterization and control of pulse shapes in a doubly resonant synchronously pumped optical parametric oscillator", APPLIED OPTICS, OPTICAL SOCIETY OF AMERICA, WASHINGTON, DC; US, vol. 49, no. 24, 20 août 2010 (2010-08-20) , pages 4489-4493, XP001556802, ISSN: 0003-6935, DOI: 10.1364/AO.49.004489
 • HAIBO WANG ET AL: "Tunable Continuous-Wave Doubly Resonant Optical Parametric Oscillator by Use of a Semimonolithic KTP Crystal", APPLIED OPTICS, vol. 41, no. 6, 20 février 2002 (2002-02-20), page 1124, XP055009987, ISSN: 0003-6935, DOI: 10.1364/AO.41.001124

**Description**

La présente invention est relative aux oscillateurs paramétriques optiques constitués à partir de deux cavités séparément résonnantes pour chacune des ondes générées par conversion paramétrique d'ordre deux. Elle concerne plus particulièrement l'amélioration de leurs capacités d'accord en fréquence, tant en vitesse de balayage qu'en gamme spectrale.

Les processus non linéaires du deuxième ordre sont utilisés en optique pour produire, à partir d'une source de rayonnement primaire, des nouveaux rayonnements pouvant être largement accordables en fréquence. L'un de ces processus, connu de l'art antérieur en tant que 'conversion paramétrique optique' permet de générer deux rayonnements, appelés signal et complémentaire, à partir d'un rayonnement dit de pompe délivré par une source de lumière cohérente telle qu'un laser. Les fréquences des trois rayonnements ($f_s, f_c$ et $f_p$) sont reliées par la loi de conservation de l'énergie, soit : $f_s + f_c = f_p$, où les indices ($s$, $c$ ou $p$) sont associés aux rayonnements signal, complémentaire et pompe, respectivement.

En pratique, la conversion paramétrique optique est obtenue en faisant propager et interagir les trois rayonnements concernés au travers d'un cristal non centro-symétrique présentant une non-linéarité optique du second ordre. Pour que le processus de conversion paramétrique soit efficace tout au long de la propagation des rayonnements à travers le cristal, il faut que les vecteurs d'onde des différents rayonnements notés $k_j$, avec $j = p$, $s$ ou $c$, respectent une condition connue de l'art antérieur en tant que 'condition d'accord de phase exact' ou 'condition de quasi-accord de phase'. La condition d'accord de phase exact peut être satisfaite dans les cristaux présentant une biréfringence optique alors que la condition de quasi-accord de phase est vérifiée dans des cristaux présentant une inversion périodique du signe de la non-linéarité optique, celle-ci pouvant être obtenue par différentes méthodes : retournement de domaines ferroélectriques [L. E. Myers, R. C. Eckardt, M. M. Fejer, R. L. Byer, W. R. Bosenberg and J. W. Pierce, 'Quasiphasematched optical parametric oscillators in bulk periodically poled LiNbO3', J. Opt. Soc. Amer. B, 12, pp.2102-2116, 1995] , croissance cristalline alternée [K. L. Vodopyanov, O. Levi, P. S. Kuo, T. J. Pinguet, L. S. Harris, M. M. Fejer, B. Gerard, L. Becouarn, E. Lallier, 'Optical parametric oscillation in quasi-phase-matched GaAs', Opt. Lett., 29, n°16, pp 1912-1914, 2004] ou encore réflexion totale interne [M. Raybaut, A. Godard, R. Haïdar, M. Lefebvre, Ph. Kupecek, Ph. Lemasson, E. Rosencher, 'Generation of mid-infrared radiation by self-difference frequency mixing in chromium-doped zinc selenide', Opt. Lett., 31, n°2, pp 220-222, 2006]. En ce qui concerne les matériaux ferroélectriques (niobate de lithium, tantalate de lithium, ....), très largement utilisés à l'heure actuelle, le retournement de domaines est réalisé de façon périodique avec un pas de retournement égal à la longueur de cohérence ($l_{coh}$), où $l_{coh}$ est définie comme la longueur que parcourent les trois rayonnements pour que leur déphasage relatif $\Delta\Phi$, donné par : $\Delta\Phi = \varphi_p - (\varphi_s + \varphi_c)$, change de $\pi$, $\varphi_j$ est le déphasage associé à la propagation du rayonnement $j$ sur une longueur $l_{coh}$. La condition de quasi-accord de phase s'écrit alors $k_p = k_s + k_c + k_\Lambda$ où $k_\Lambda$ est défini par $|k_\Lambda| = \pi / l_{coh}$.

La répartition d'énergie entre les rayonnements signal et complémentaire (et par conséquent les valeurs des fréquences $f_s$, $f_c$ produites par conversion paramétrique) est ajustable en agissant sur la condition d'accord de phase ou de quasi-accord de phase. Plusieurs paramètres tels que la température, l'orientation cristalline ou la période d'inversion du signe de la non-linéarité optique permettent de modifier l'accord de phase et ainsi d'accorder sur de très larges gammes les fréquences signal et complémentaire issues de la conversion du rayonnement laser primaire.

La conversion paramétrique d'une onde pompe en rayonnements signal et complémentaire est particulièrement intéressante pour de nombreuses applications. Au tout premier plan desquelles figurent les applications de la spectroscopie telle que la détection d'espèces moléculaires ou atomiques pouvant exister à l'état de traces. La très grande gamme spectrale d'accord des rayonnements signal et complémentaire permet alors de couvrir les différentes fréquences d'absorption d'une ou de plusieurs espèces que l'on souhaite détecter. Toutefois, afin de connaître les abondances relatives des différentes espèces, il est nécessaire que le rayonnement accordable produit par conversion paramétrique soit de grande pureté spectrale afin de pouvoir accorder la fréquence de la source paramétrique sélectivement sur les fréquences d'absorption de chaque espèce sans être perturbé par la présence des transitions d'absorption des autres composés.

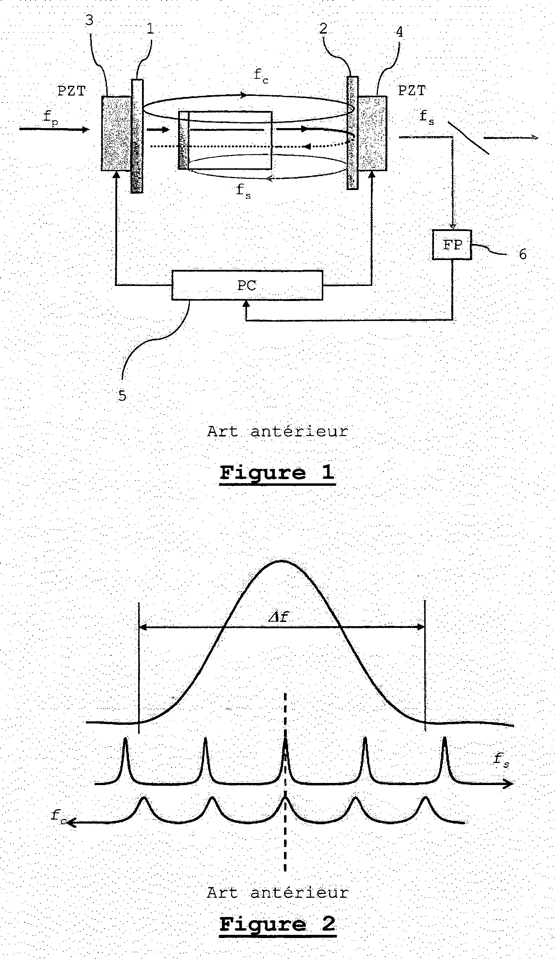

La production d'un rayonnement paramétrique associant à la fois pureté spectrale et très grande gamme spectrale d'accord est obtenue en insérant le cristal non linéaire dans un résonateur optique particulier, connu de l'art antérieur en tant que ['Oscillateur paramétrique optique avec retour de pompe à maintien de phase achromatique', FR2902940, PCT n° EP2007/056438]. La figure 1 représente un tel oscillateur où les ondes signal et complémentaire oscillent dans deux cavités optiques imbriquées tandis que le rayonnement de pompe effectue un aller et retour à travers le cristal non linéaire, en conservant une valeur optimale du déphasage relatif $\Delta\Phi$ après réflexion par le miroir achromatique 2, afin que la conversion paramétrique soit efficace aussi bien pendant les trajets aller que retour et ceci quelle que soit la longueur d'onde de fonctionnement de l'oscillateur paramétrique optique. L'émission d'un rayonnement de grande pureté spectrale ou mono fréquence est obtenue en choisissant les longueurs de chaque cavité pour qu'il n'existe, dans la courbe de gain paramétrique, qu'une seule superposition entre les modes longitudinaux des deux cavités de sorte que l'émission ne s'établisse que sur cette coïncidence, comme illustré sur la figure 2.

L'oscillateur paramétrique optique avec retour de pompe à maintien de phase achromatique offre plusieurs avantages : faible seuil d'oscillation, compacité et émission d'un rayonnement de grande pureté spectrale sur toute la plage de conversion paramétrique. L'accord continu de la fréquence, c'est-à-dire sans changement de modes, est obtenu en déplaçant la coïncidence de modes des cavités signal et complémentaire dans la courbe de gain paramétrique. Pour cela, il est nécessaire d'ajuster simultanément et très finement au moins deux paramètres (longueurs de chaque cavité au moyen de cales piézo-électriques ou fréquence de pompe et longueur d'une cavité ou encore, température du cristal et longueur d'une cavité, par exemple) afin que la coïncidence de modes entre les deux cavités, illustrée par la figure 2, soit très précisément maintenue tout au long du balayage en fréquence. Un calcul au premier ordre, réalisé en négligeant les variations d'indice du cristal avec la longueur d'onde, montre que la coïncidence de mode est maintenue si les positions des miroirs d'entrée 1 et de fond 2, varient dans le rapport :

$$\frac{\delta M_1}{\delta M_2} = -\left(1+R\right) \qquad \text{avec} \qquad R = \left(\frac{f_s}{f_c}\frac{l_c}{l_s}\right)$$

où $\delta M_1$ et $\delta M_2$ sont les déplacements des miroirs d'entrée 1 et de fond 2 et $l_s$ et $l_c$ sont les longueurs optiques des cavités signal et complémentaire, respectivement. Cette relation entre les déplacements des miroirs 1 et 2 démontre qu'il suffit de changer les longueurs des cavités signal et complémentaire linéairement dans des sens opposés pour maintenir la coïncidence de mode.

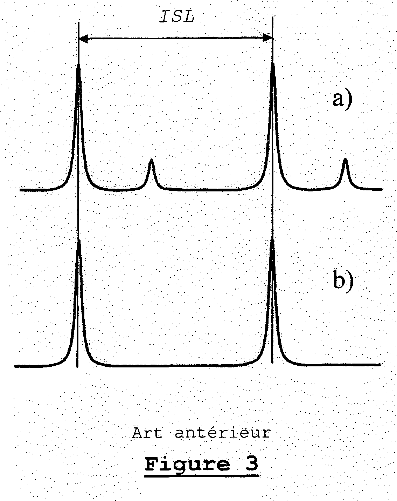

Si l'on applique la relation ci-dessus sans précaution particulière, c'est-à-dire sans corriger les imperfections de déplacement liées par exemple aux non-linéarités et à l'hystérésis des cales piézo-électriques 3 et 4, le balayage continu de la fréquence signal ou complémentaire ne peut être obtenu que sur une gamme restreinte, de l'ordre de 10 GHz. Pour obtenir un accord en fréquence sur une plage plus étendue, il devient nécessaire de corriger les imperfections des cales piézoélectriques qui sont préjudiciables à la linéarité des déplacements et ainsi au maintien de la coïncidence de modes. La correction se fait en contrôlant régulièrement la pureté spectrale du rayonnement signal ou complémentaire émis lors du balayage. Ce contrôle régulier peut être réalisé de façon automatique au moyen d'un micro-ordinateur 5 interfacé à un spectromètre ou à un mesureur de longueur d'onde ou encore à un étalon Fabry Perot 6. Il consiste à corriger finement la position d'un des miroirs 1 ou 2 pour éviter l'apparition d'un mode parasite, situation illustrée par la figure 3 qui présente la réponse de l'étalon Fabry Perot avec et sans apparition d'un mode parasite, cas a) et b), respectivement.. La réponse de l'étalon présente une succession de pics régulièrement espacés d'un intervalle spectral libre (ISL), distance correspondant à une variation de l'épaisseur de l'étalon égale à une demi-longueur d'onde.

Après correction, il est possible d'accorder continûment, donc sans saut de mode, la fréquence de l'oscillateur sur typiquement 80 % de la pleine largeur de la courbe de gain paramétrique, notée $\Delta f$. On atteint ainsi une plage d'accord continu qui dépasse généralement la centaine de GHz pour un fonctionnement de l'oscillateur paramétrique en régime impulsionnel nanoseconde qui est très largement répandu. Cette méthode de balayage présente toutefois deux inconvénients majeurs : une augmentation du coût à hauteur du moyen de contrôle utilisé (microordinateur et étalon Fabry Perot, par exemple) et une limitation de la vitesse de balayage de par la nécessité de vérifier régulièrement l'existence ou non d'un mode parasite. De plus, si l'on souhaite étendre la plage de la gamme d'accord au-delà de la largeur de gain paramétrique, il est nécessaire d'agir sur un troisième paramètre afin de déplacer le maximum de la courbe de gain paramétrique au fur et à mesure du balayage en fréquence, ce qui complexifie la procédure.

L'état de l'art est également représenté par les publications suivantes :

publication 1: HARDY B ET AL: "Compact, single-frequency, doubly resonant optical parametric oscillator pumped in an achromatic phase-adapted double-pass geometry",OPTICS LETTERS, OSA, OPTICAL SOCIETY OF AMER-ICAvol. 36, no. 5, 1 mars 2011 (2011-03-01), pages 678-680;
publication 2: JOSEPH E SCHAAR ET AL: "Characterization and control of pulse shapes in a doubly resonant synchronously pumped optical parametric oscillator",APPLIED OPTICS, OPTICAL SOCIETY OF AMERICA,vol. 49, no. 24, 20 août 2010 (2010-08-20), pages 4489-4493.

Les deux publications dévoilent un oscillateur paramétrique optique doublement résonnant dans lequel la fréquence du signal de sortie est accordée en réglant la longueur des deux cavités via un déplacement des miroirs.

L'invention proposée a pour objet de surmonter ces limitations, permettant ainsi d'accroître le domaine d'utilisation de ce type de source, en particulier sa plage et sa capacité de balayage rapide en fréquence, tout en réduisant son coût de mise en oeuvre.

L'oscillateur paramétrique optique doublement résonnant avec retour de pompe à maintien de phase achromatique comportant une source de rayonnement pompe à une fréquence $f_p$, comporte, selon l'invention toutes les caractéristiques de la revendication 1 et notamment, dans le sens de propagation aller du rayonnement pompe selon une direction *z*,

un cristal non-linéaire ayant une face avant et une face arrière,

un miroir achromatique situé en aval de la face arrière du cristal définissant avec un premier miroir situé sur la face avant du cristal une première cavité résonnante pour le rayonnement signal à la fréquence $f_s$ et avec un second miroir situé en amont de la face avant du cristal une seconde cavité résonnante pour le rayonnement complémentaire à la fréquence $f_c$,

les deux cavités, de longueurs optiques respectives $l_s$ et $l_c$, formant un résonateur doublement résonnant pour un seul couple de modes longitudinaux signal et complémentaire,

le rayonnement pompe à la fréquence $f_p$ effectue à travers le cristal un trajet aller entrant par la face avant du cristal et sortant par la face arrière du cristal, puis, après réflexion sur le miroir achromatique, un trajet retour entrant par la face arrière du cristal dont les indices optiques sont respectivement $n_s$ et $n_c$ aux fréquences signal $f_s$ et complémentaire $f_c$,

le cristal est de forme prismatique avec sa face arrière inclinée suivant un angle $\alpha$ non nul par rapport à une direction *x* orthogonale à la direction *z* de propagation des rayonnements, , le cristal étant mobile dans le plan *xz*

l'invention se **caractérise en ce que** le cristal est mobile en translation dans le plan *xz* suivant une direction inclinée d'un angle $\beta$ non nul par rapport à la direction *x* tel que $tg\beta = \dfrac{\left(n_c - 1\right) + R \cdot \left(n_s - 1\right)}{R} tg\alpha$, avec

$$R = \left(\dfrac{f_s}{f_c}\dfrac{l_c}{l_s}\right),$$ pour modifier simultanément les

longueurs optiques respectives $l_s$ et $l_c$, des deux cavités résonnantes dans un rapport tel que la double résonance pour un seul couple de modes longitudinaux signal et complémentaire est maintenue, ce grâce à quoi les valeurs des fréquences $f_s$ et $f_c$ sont ainsi accordables continûment dans une large gamme, sans avoir recours à un dispositif de contrôle et de correction des longueurs de cavités pour garantir la coïncidence de modes entre les deux cavités.

Le principe de fonctionnement de l'invention est le suivant : en déplaçant par translation dans le plan *xz* le cristal mobile dans la direction inclinée de l'angle $\beta$ par rapport à la direction *x*, on modifie simultanément les positions transversale et longitudinale du cristal dans les deux cavités et de cette façon les longueurs optiques des cavités signal ($l_s$) et complémentaire ($l_c$) :

- $l_s$ change car d'une part, la distance optique parcourue dans le cristal est modifiée compte tenu de sa forme prismatique et de la composante transversale du déplacement (suivant la direction *x*) ; d'autre part, la composante longitudinale agit sur la position du cristal suivant la direction *z* et ainsi sur la position du miroir déposé sur la face d'entrée du cristal non linéaire ;
- $l_c$ change car la distance optique parcourue dans le cristal est modifiée compte tenu de sa forme prismatique et de la composante transversale (suivant la direction *x*) du déplacement.

Pour un angle $\alpha$ donné, il suffit de choisir la valeur de l'angle $\beta$ pour qu'une cavité s'allonge alors que l'autre diminue dans le rapport qui maintient la coïncidence de modes. Un calcul au premier ordre (en négligeant à la fois la variation d'indice du cristal en fonction du changement de longueur d'onde obtenu et la dépendance de R en fonction des faibles variations de $l_s$ et $l_c$ permet d'exprimer simplement la relation entre les angles $\alpha$ et $\beta$ pour maintenir la coïncidence de modes :

$$tg\beta = \dfrac{\left(n_c - 1\right) + R \cdot \left(n_s - 1\right)}{R} tg\alpha$$

où $n_s$ et $n_c$ sont les indices optiques du cristal non linéaire aux fréquences signal et complémentaire.

Avantageusement, le cristal non linéaire comporte des domaines d'inversion périodique traversés successivement par les rayonnements selon la direction *z* permettant de fonctionner en quasi-accord de phase. A ce sujet, on se reportera avantageusement aux enseignements de l'invention ayant fait l'objet de la demande de brevet FR 2 902 940.

Selon ce mode de fonctionnement en quasi-accord de phase, la face arrière du dernier domaine périodique traversé avant réflexion sur le miroir achromatique est orientée selon un plan coupant le plan xy, la direction *y* étant orthogonale aux directions *x* et *z*, selon une droite parallèle à la direction *y* ce grâce à quoi la valeur de phase relative $\Delta\Phi$ entre les ondes est maintenue quelle que soit la position du cristal dans la direction *x*.

Afin de bénéficier d'une plage d'accord continu supérieure à la largeur de la courbe de gain paramétrique, la périodicité des domaines d'inversion du cristal varie continûment dans la direction $x$ (cristal connu suivant la dénomination anglo-saxonne en tant que 'fan-out periodic poled crystal'). La variation de périodicité de ce cristal suivant la direction $x$ peut alors être telle que le maximum de la courbe de gain paramétrique se déplace de façon synchrone avec le rapport de double résonance des cavités signal et complémentaire. Ainsi, en agissant sur un seul paramètre, il est possible d'accorder continûment la fréquence de l'oscillateur paramétrique optique sur une plage qui n'est pas limitée à la largeur de la courbe de gain paramétrique ($\Delta f$).

Bien entendu, plus la plage d'accord en fréquence est étendue et plus il faut tenir compte de la variation des longueurs optiques des cavités due à la dispersion de l'indice optique et au déplacement du cristal lui-même. En d'autres termes, la relation entre $\alpha$ et $\beta$, établie ci-dessus au premier ordre ($R$, $n_s$ et $n_c$ supposés constants), cesse d'être vérifiée pour de très grands balayages. Un calcul complet montre que l'écart à la relation établie ci-dessus reste cependant inférieur à 1 % pour une plage d'accord continu de 1 THz. Si nécessaire, la fréquence du laser de pompe est accordable. Il est alors possible de compenser la dispersion optique du cristal et la variation des longueurs optiques des cavités pour obtenir un accord continu sur une gamme de fréquence très étendue sans affecter la vitesse de balayage. La fréquence du laser de pompe peut être délivrée par un laser accordable tel qu'un laser fibré.

Il est aussi possible de compenser la dispersion optique du cristal entraînant la variation des longueurs optiques des cavités sans affecter la vitesse de balayage, en modifiant la longueur optique du cristal non linéaire par effet électro-optique, en cours de balayage.

D'autres caractéristiques et avantages de l'invention ressortiront de la description qui suit et des exemples non limitatifs.

Les dessins annexés illustrent l'invention :

-     La figure 1 représente un oscillateur paramétrique optique avec retour de pompe à maintien de phase achromatique, connu de l'art antérieur avec son dispositif de contrôle en fréquence pour le balayage continu en longueur d'onde ;
-     La figure 2 illustre le fonctionnement mono-fréquence de l'oscillateur obtenu en faisant coïncider un mode longitudinal de la cavité signal avec un mode longitudinal de la cavité complémentaire dans la largeur de la courbe de gain paramétrique ($\Delta f$) ;
-     La figure 3 présente la réponse d'un étalon Fabry Perot avec apparition d'un mode parasite (cas a) et dans le cas d'un fonctionnement mono-fréquence pur (cas b), chaque pic de transmission se reproduit à l'identique après un écart de fréquence égal à la valeur d'un intervalle spectral libre (*ISL*) de l'étalon,
-     La figure 4 présente schématiquement la mise en oeuvre de l'invention ;
-     La figure 5 présente une mise en oeuvre de l'invention avec un cristal de niobate de lithium retourné périodiquement (PPLN), a) : schéma de la cavité, b) vue de côté du cristal de PPLN illustrant les domaines de retournement ;
-     La figure 6 est relative à une mise en oeuvre de l'invention avec un cristal de niobate de lithium retourné périodiquement ayant un pas continûment variable suivant la direction $x$ (cristal de PPLN de type fan-out), a) schéma général de la cavité, b) illustration de la variation du pas de retournement suivant la direction $x$, c) illustration 3D du cristal;
-     La figure 7 est relative à une mise en oeuvre de l'invention avec une partie du cristal de longueur optique variable par effet électro-optique, a) schéma de la cavité, b) vue en coupe du cristal illustrant la partie de longueur optique variable avec les électrodes de commande ;
-     La figure 8 est relative à une mise en oeuvre de l'invention avec un cristal présentant un second angle $\gamma$ selon la direction $y$ afin de pouvoir ajuster la valeur du déphasage relatif $\Delta\Phi$ entre les ondes par simple déplacement du cristal dans la direction $y$, perpendiculaire au plan $xz$.

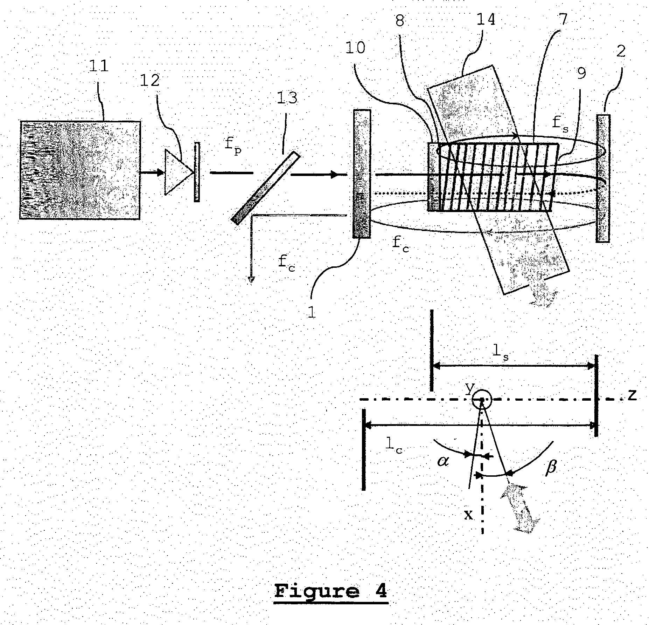

Un schéma général de mise en oeuvre de l'invention est donné sur la figure 4. Le laser de pompe 11 délivre un rayonnement primaire à la fréquence $f_p$ qui traverse un isolateur optique 12 puis une lame séparatrice 13 permettant de filtrer le rayonnement complémentaire du rayonnement de pompe qui a traversé le cristal non linéaire 7 avant d'être réfléchi par le miroir achromatique 2. Ce miroir achromatique 2 réfléchit tout ou partie des trois rayonnements en maintenant un déphasage relatif entre ces rayonnements ($\Delta\Phi$) constant quelle que soit la fréquence signal ou complémentaire de l'oscillateur paramétrique optique. Le miroir 8, déposé sur la face d'entrée du cristal non linéaire 7 est totalement réfléchissant à la fréquence signal bien que totalement transparent aux deux autres longueurs d'onde alors que le miroir 1 est transparent aux rayonnements pompe et signal tout en réfléchissant partiellement la longueur d'onde complémentaire qui est disponible pour l'utilisateur après réflexion sur la lame séparatrice 13. Le cristal non linéaire 7 est monté fixe sur une platine mobile en translation dans le plan $xz$ 14 qui assure le déplacement suivant l'angle $\beta$ par rapport à la direction $x$ en vue de l'accord continu de la fréquence. Les angles $\alpha$ et $\beta$ sont repérés sur la figure 4 par rapport à la direction $x$ orthogonale à la direction $z$ de propagation des rayonnements, la direction $y$ est orthogonale au plan de la figure.

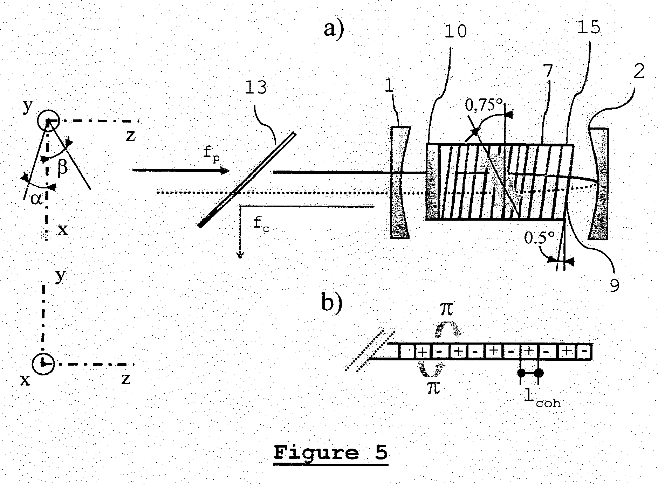

La figure 5 présente une première mise en oeuvre de l'invention avec un cristal de niobate de lithium retourné périodiquement (PPLN) pompé par un laser Nd :YAG à 1,064 $\mu$m en vue de produire une onde signal à 1,45 $\mu$m ($n_s \sim$ 2,14) et une onde complémentaire à 4 $\mu$m ($n_c \sim$ 2,06), pour un quasi-accord de phase classique de type 0. Le dernier domaine périodique 15 traversé avant réflexion sur le miroir achromatique 2 est orienté parallèlement à la face de sortie 9 du cristal 7, ce grâce à quoi la valeur de phase relative $\Delta\Phi$ entre les ondes est maintenue quelle que soit la position du cristal dans la direction $x$. La face de sortie 9 est traitée anti-reflet pour les trois longueurs d'onde afin de réduire les pertes de Fresnel en sortie de cristal. Le rapport des longueurs optiques des cavités ($l_s/l_c$) est choisi égal à 0,96 (valeur typique permettant d'obtenir un fonctionnement monomode longitudinal stable). L'application de la relation entre les angles $\alpha$ et $\beta$ montre que dans ces conditions $\beta \sim 1,5 \, \alpha$. Pour une valeur typique de l'angle $\alpha = 0,5°$ et une longueur optique $l_c$ de 12 mm (cavité contenant un cristal de niobate long de 5 mm), on obtient une gamme d'accord de 58 GHz pour un déplacement de la platine de 1 mm. Sachant que la vitesse de déplacement d'une platine commerciale est de l'ordre de 5 mm / s, on trouve que la vitesse de balayage est alors de 290 GHz / s alors qu'elle est typiquement de 0,5 GHz / s lorsque l'on agit séparément sur les deux longueurs de cavité au moyen de cales piézo-électriques et que l'on corrige des imperfections de déplacement en mettant en oeuvre un mesureur de longueur d'onde interfacé à un micro-ordinateur [A. Berrou, M. Raybaut, A. Godard, M. Lefebvre, Appl. Phys B, 98 (2010)].

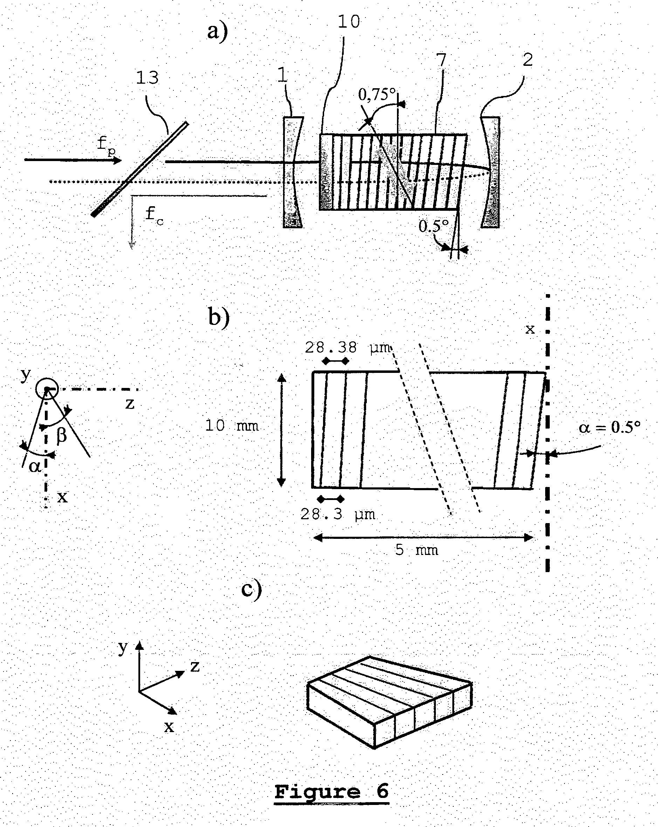

La figure 6 illustre une mise en oeuvre de l'invention avec un cristal de niobate de lithium à pas continûment variable suivant la direction $x$, cristal de type 'fan-out'. Pour les conditions précédentes (cristal de niobate de lithium long de 5 mm fonctionnant autour de 4 $\mu$m pour la longueur d'onde complémentaire avec $\alpha = 0,5°$ et $\beta = 0,75°$), on déduit qu'une plage d'accord en fréquence continu de 580 GHz est obtenue pour un déplacement transversal de la platine égal à 10 mm. La longueur d'onde centrale de l'oscillateur paramétrique optique suivra cette variation de fréquence en choisissant un cristal 'fan-out' dont le pas varie entre 28,3 et 28,38 $\mu$m sur 10 mm. Les spécifications géométriques d'un tel cristal sont par exemple une longueur selon la direction $z$ de 5 mm, une épaisseur de 1 mm selon la direction $y$ et 10 mm de hauteur selon la direction $x$, la longueur de chaque domaine variant de 28,3 $\mu$m à 28,38 $\mu$m. comme indiquées sur la partie b) de la figure 6

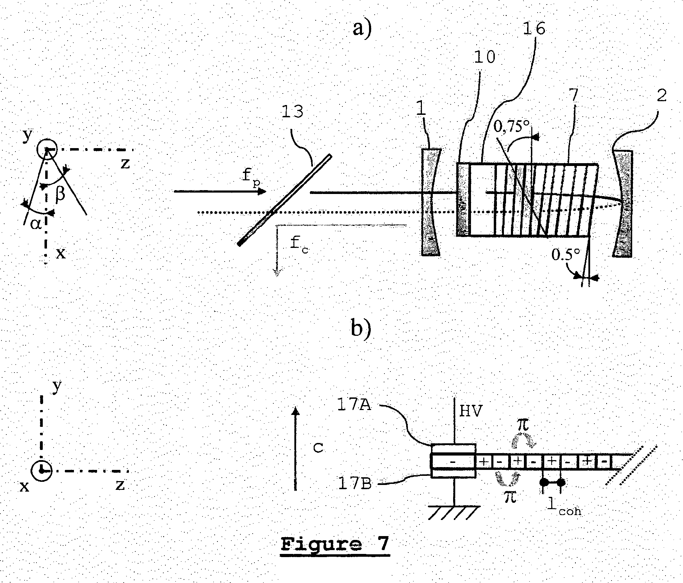

La figure 7 illustre un mode de fonctionnement permettant de compenser la dispersion optique du cristal et la variation du rapport R dans le cas d'un accord de fréquence continu sur une très large gamme, typiquement supérieur à 1 THz. Le cristal de niobate de lithium est ici utilisé en quasi-accord de phase de type II. Afin de compenser sa dispersion optique il comporte un premier domaine 16 de longueur optique variable, non retournée périodiquement. Pour ce type d'accord de phase de type II, l'onde complémentaire est polarisée suivant l'axe cristallographique $c$ du cristal, orienté suivant la direction $y$, et les ondes signal et pompe sont polarisées orthogonalement à l'axe cristallographique $c$. Par application d'un champ électrique suivant l'axe cristallographique $c$ du cristal au moyen des électrodes 17A et 17B, la longueur optique de la cavité résonnante complémentaire est ajustée afin de compenser la dispersion optique entre les trois rayonnements et la variation du rapport R qui ne deviennent plus négligeables pour un accord de fréquence sur une très large gamme.

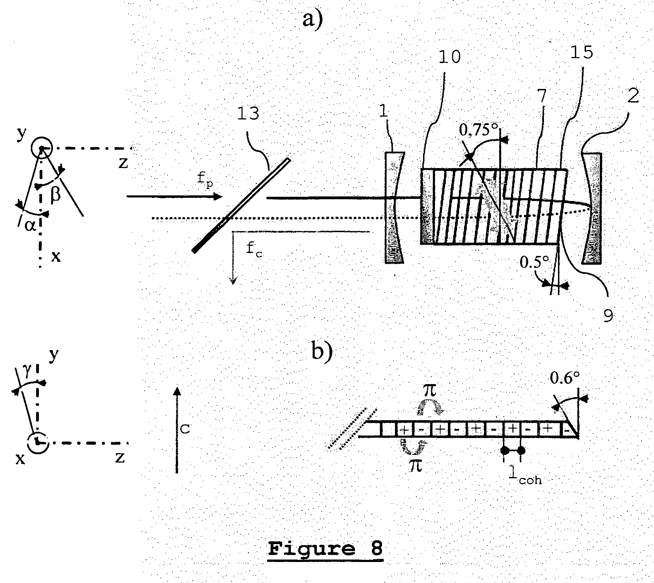

La figure 8 présente un mode de fonctionnement qui permet d'ajuster la valeur de la phase relative au retour ($\Delta\Phi$) entre les ondes par modification de la position selon la direction $y$ du cristal dans la cavité optique. L'ajustement de la position du cristal 7 suivant la direction $y$ peut être obtenue en intercalant par exemple une cale piézo-électrique entre la platine mobile et le cristal. Dans ce but, la face arrière (9) du dernier domaine périodique (15) est polie de façon à ce qu'elle forme un angle $\gamma$ par rapport à la direction $y$ dans toute section selon un plan parallèle au plan $yz$. Suivant le cristal utilisé, la valeur de l'angle $\gamma$ est obtenue à partir de la connaissance antérieure des valeurs des indices optiques Ainsi, pour un cristal de niobate de lithium d'épaisseur 1 mm, la valeur de l'angle $\gamma$ est choisie autour de 0,6° afin de pouvoir faire varier de $\pi$ la valeur de $\Delta\Phi$ et obtenir ainsi la phase optimale pour que la conversion paramétrique soit efficace à l'aller comme au retour. Une fois le réglage de la phase effectué, l'accord continu en fréquence est obtenu comme précédemment, en déplaçant le cristal suivant l'angle $\beta$ par rapport à la direction $x$. Cette configuration de mise en oeuvre permet de diminuer les contraintes de polissage du cristal 7, en particulier, il n'est pas nécessaire de spécifier l'épaisseur du dernier domaine 15, compte tenu de la possibilité de faire varier cette épaisseur par le déplacement vertical du cristal.

Bien entendu, les types de réalisation proposés ne représentent pas une liste exhaustive des réalisations possibles.

## Revendications

1. Oscillateur paramétrique optique doublement résonnant avec retour de pompe à maintien de phase achromatique comportant une source de rayonnement pompe à une fréquence $f_p$, et comportant dans le sens de propagation aller du rayonnement pompe, un cristal non linéaire (7) ayant une face avant (8) et une face arrière (9) et apte à générer un rayonnement signal et un rayonnement implémentaire à partir dudit rayonnement de pompe via un effet non linéaire d'ordre deux, un miroir achromatique (2) situé en aval de la face arrière du cristal, définissant avec un premier miroir (10) situé sur la face avant (8) du cristal (7) une première cavité résonnante pour le rayonnement signal à la fréquence $f_s$ et avec un second miroir (1) situé en amont de la face avant (8) du cristal (7) une seconde cavité résonnante pour le rayonnement complémentaire à la fréquence $f_c$, la première et la deuxième cavités, de longueurs optiques respectives $l_s$ et $l_c$, formant un résonateur doublement résonnant pour un seul couple de modes longitudinaux signal et complémentaire, le rayonnement pompe à la fréquence $f_p$ effectuant à travers le cristal un trajet aller entrant par la face avant (8) du cristal et sortant par la face arrière (9) du cristal, puis, après réflexion sur le miroir achromatique (2), un trajet retour entrant par la face arrière (9) du cristal dont les indices optiques sont respectivement $n_s$ et $n_c$ aux fréquences signal $f_s$ et complémentaire $f_c$, le cristal étant de forme prismatique avec sa face arrière (9) inclinée suivant un angle $\alpha$ non nul par rapport à une direction $x$ orthogonale à la direction $z$ de propagation des rayonnements dans le plan $xz$ formé par les directions x et y

**caractérisé en ce que** le cristal (7) est mobile en translation dans le plan $xz$ suivant une direction inclinée d'un angle $\beta$ non nul par rapport à la direction $x$ tel que $$tg\beta = \frac{\left(n_c - 1\right) + R \cdot \left(n_s - 1\right)}{R} tg\alpha, \text{ avec } R = \left(\frac{f_s}{f_c}\frac{l_c}{l_s}\right),$$

pour modifier simultanément les longueurs optiques respectives $l_s$ et $l_c$ des première et deuxième cavités résonnantes dans un rapport tel que la double résonance pour un seul couple de modes longitudinaux signal et complémentaire est maintenue, ce grâce à quoi les valeurs des fréquences $f_s$ et $f_c$ sont accordables continûment dans une large gamme.

2. Oscillateur paramétrique optique selon la revendication 1, **caractérisé en ce que** le cristal non-linéaire comporte des domaines d'inversion périodique traversés successivement par les rayonnements selon la direction z permettant de fonctionner en quasi-accord de phase.

3. Oscillateur paramétrique optique selon la revendication 2, **caractérisé en ce que** la face arrière (9) du dernier domaine périodique (15) traversé avant réflexion sur le miroir achromatique (2) est orientée selon un plan qui coupe le plan $xy$ selon une droite parallèle à la direction $y$, la direction y étant orthogonale aux directions x et z, ce grâce à quoi la valeur de phase relative $\Delta\Phi$ entre les ondes des rayonnements est maintenue quelle que soit la position du cristal dans la direction $x$.

4. Oscillateur paramétrique selon la revendication 2, **caractérisé en ce que** la périodicité des domaines d'inversion du cristal varie continûment dans la direction x.

5. Oscillateur paramétrique selon la revendication 4, **caractérisé en ce que** la variation de la périodicité suivant la direction x est telle que le maximum de la courbe de gain paramétrique se déplace de façon synchrone avec le rapport de double résonance des cavités signal et complémentaire. des cavités signal et complémentaire.

6. Oscillateur paramétrique optique selon la revendication 4, **caractérisé en ce que** la face arrière (9) du dernier domaine périodique (15) est polie de façon à ce qu'elle forme un angle $\gamma$ par rapport à la direction $y$ dans toute section selon un plan parallèle au plan $yz$, ce grâce à quoi la valeur de la phase relative au retour $\Delta\Phi$ entre les ondes des rayonnements peut être ajustée par modification de la position selon la direction $y$ du cristal dans la cavité optique.

7. Oscillateur paramétrique selon la revendication 1, **caractérisé en ce que** la fréquence du laser de pompe est accordable ce grâce à quoi, il est possible de compenser la dispersion optique du cristal et la variation des longueurs optiques des cavités, pour obtenir un accord continu sur une gamme de fréquence très étendue.

8. Oscillateur paramétrique suivant la revendication 2, **caractérisé en ce que** le premier domaine est de longueur optique variable via l'application d'un champ électrique ce grâce à quoi il est possible de compenser la d'un champ dispersion optique du cristal et la variation des longueurs optiques des cavités pour obtenir un électrique accord continu sur une gamme de fréquence très étendue.

9. Oscillateur paramétrique selon la revendication 8, **caractérisé en ce que** l'onde du rayonnement complémentaire est polarisée suivant l'axe cristallographique c du cristal et les ondes des rayonnements signal et pompe sont polarisées orthogonalement à cet axe $c$ orienté suivant la direction $y$, un champ électrique est appliqué au premier domaine suivant l'axe $c$ pour ajuster la longueur optique de la cavité résonnante complémentaire afin de compenser la dispersion optique entre les trois rayonnements et la variation du rapport *R*.

**Patentansprüche**

1.  Parametrischer optischer Doppelresonanz-Oszillator mit achromatisch gehaltener Pumprückwegphase, wobei der Oszillator aufweist:

    eine Quelle für eine Pumpstrahlung einer Frequenz $f_p$,
    einen im Strahlengang der Pumpstrahlung angeordneten nichtlinearen Kristall (7) mit einer Vorderfläche (8) und einer Rückfläche (9), der in der Lage ist, mittels eines nichtlinearen Effekts zweiter Ordnung ausgehend von der Pumpstrahlung eine Signalstrahlung und eine Komplementärstrahlung zu erzeugen, und
    einen - in Strahlrichtung gesehen - nach der Rückfläche des Kristalls angeordneten achromatischen Spiegel (2), der gemeinsam mit einem an der Vorderfläche (8) des Kristalls (7) angeordneten ersten Spiegel (10) einen ersten Resonanzhohlraum für die Signalstrahlung der Frequenz $f_s$ bildet und gemeinsam mit einem - in Strahlrichtung gesehen - vor der Vorderfläche (8) des Kristalls (7) angeordneten zweiten Spiegel (1) einen zweiten Resonanzhohlraum für die Komplementärstrahlung der Frequenz $f_c$ bildet, wobei der erste Hohlraum mit der optischen Länge $l_s$ und der zweite Hohlraum mit der optischen Länge $l_c$ einen Doppelresonanz-Oszillator für ein bestimmtes Längsmoden-Signal/Komplementär-Paar bilden, wobei der Pumpstrahl der Frequenz $f_p$ auf einem Hinweg den Kristall durchquert, dabei durch die Vorderfläche (8) des Kristalls eintritt und durch die Rückfläche (9) des Kristalls austritt, dann nach Reflexion an dem achromatischen Spiegel (2) auf einem Rückweg durch die Rückfläche (9) des Kristalls eintritt, dessen optische Indizes $n_s$ bzw. $n_c$ für die Signalfrequenz $f_s$ bzw. Komplementärfrequenz $f_c$ sind, wobei der Kristall die Form eines Prismas hat, dessen Rückfläche (9) in einem Winkel $\alpha$ von ungleich Null bezüglich einer x-Richtung, die orthogonal zur Strahlausbreitungsrichtung z ist, in einer von der x- und z-Richtung gebildeten xz-Ebene geneigt ist,
    **dadurch gekennzeichnet, dass** der Kristall (7) in der xz-Ebene in eine Richtung verschiebbar ist, die in einem Winkel $\beta$ von ungleich Null bezüglich der x-Richtung geneigt ist, so dass

    $$tg\beta = \frac{(n_c - 1) + R \cdot (n_s - 1)}{R} tg\alpha, \quad \text{mit} \quad R = \left(\frac{f_s}{f_c}\frac{l_c}{l_s}\right),$$

    ist, um gleichzeitig die optischen Länge $l_s$ bzw. $l_c$ des ersten bzw. zweiten Resonanzhohlraums in einem solchen Verhältnis zu ändern, dass die Doppelresonanz für ein bestimmtes Längsmoden-Signal/Komplementär-Paar aufrechterhalten wird, wodurch sich die Werte der Frequenzen $f_s$ und $f_c$ in einem weiten Bereich kontinuierlich abstimmen lassen.

2.  Parametrischer optischer Oszillator nach Anspruch 1, **dadurch gekennzeichnet, dass** der nichtlineare Kristall periodische Inversionsdomänen aufweist, die nacheinander von den Strahlen in die z-Richtung durchlaufen werden, um einen Quasi-Phasenabstimmung-Betrieb zu erlauben.

3.  Parametrischer optischer Oszillator nach Anspruch 2, **dadurch gekennzeichnet, dass** die Rückfläche (9) der letzten periodischen Domäne (15), die vor der Reflexion an dem achromatischen Spiegel (2) durchlaufen wird, in einer Ebene orientiert ist, die die xy-Ebene in einer Geraden, die parallel zur y-Richtung ist, schneidet, wobei die y-Richtung orthogonal zur x- und z-Richtung ist, wodurch der Wert der relativen Phase $\Delta\Phi$ zwischen den Wellen der Strahlen aufrechterhalten wird, unabhängig von der Position des Kristalls in x-Richtung.

4.  Parametrischer optischer Oszillator nach Anspruch 2, **dadurch gekennzeichnet, dass** sich in die x-Richtung die Periodizität der Inversionsdomänen des Kristalls kontinuierlich ändert.

5.  Parametrischer optischer Oszillator nach Anspruch 4, **dadurch gekennzeichnet, dass** die Änderung der Periodizität in x-Richtung derart ist, dass sich das Maximum der parametrischen Verstärkungskurve synchron mit dem Verhältnis der Doppelresonanz der Signal- und Komplementär-Resonatoren verschiebt.

6.  Parametrischer optischer Oszillator nach Anspruch 4, **dadurch gekennzeichnet, dass** die Rückfläche (9) der letzten periodischen Domäne (15) derart geschliffen ist, dass sie in einer zur yz-Ebene parallelen Ebene in jedem Schnitt einen Winkel γ bezüglich der y-Richtung bildet, was erlaubt, durch Änderung der Position des Kristalls in y-Richtung in dem optischen Hohlraum den Wert der relativen Phase beim Rückweg ΔΦ zwischen den Wellen der Strahlen anzupassen.

7. Parametrischer optischer Oszillator nach Anspruch 1, **dadurch gekennzeichnet, dass** die Frequenz des Pumplasers abstimmbar ist, was ermöglicht, die optische Dispersion des Kristalls und die Änderung der optischen Längen der Hohlräume zu kompensieren, um eine kontinuierliche Abstimmung über einen sehr weiten Frequenzbereich zu erzielen.

8. Parametrischer optischer Oszillator nach Anspruch 2, **dadurch gekennzeichnet, dass** die erste Domäne eine durch Anlegen eines elektrischen Feldes veränderbare optische Länge hat, was ermöglicht, die optische Dispersion des Kristalls und die Änderung der optischen Längen der Hohlräume zu kompensieren, um eine kontinuierliche Abstimmung über einen sehr weiten Frequenzbereich zu erzielen.

9. Parametrischer optischer Oszillator nach Anspruch 8, **dadurch gekennzeichnet, dass** die Welle des Komplementärstrahls entlang der kristallographischen c-Achse polarisiert ist und die Wellen des Signalstrahls und des Pumpstrahls orthogonal zu dieser in y-Richtung orientierten c-Achse polarisiert sind, wobei an die erste Domäne ein elektrisches Feld in Richtung der c-Achse angelegt wird, um die optische Länge des Komplementär-Resonanzhohlraums anzupassen, um die optische Dispersion zwischen den drei Strahlen und die Änderung des Verhältnisses R zu kompensieren.

## Claims

1. Doubly resonant optical parametric oscillator with achromatic phase-maintaining pump reflection comprising a pump radiation source at a frequency $f_p$, and comprising in the forward propagation direction of the pump radiation a non linear crystal (7) having a front face (8) and a rear face (9) and capable of generating a signal radiation and a complementary radiation from said pump radiation via a second order non-linear effect, an achromatic mirror (2) situated downstream of the rear face of the crystal, defining with a first mirror (10) situated on the front face (8) of the crystal (7) a first resonant cavity for the radiation signal at the frequency $f_s$ and with a second mirror (1) situated upstream of the front face (8) of the crystal (7) a second resonant cavity for the complementary radiation at the frequency $f_c$, the first and the second cavities, of respective optical lengths $l_s$, and $l_c$, forming a doubly resonant resonator for a single pair of longitudinal signal and complementary modes, the pump radiation at the frequency $f_p$ taking through the crystal a forward path entering via the front face (8) of the crystal and exiting via the rear face (9) of the crystal, then, after reflection on the achromatic mirror (2), a backward path entering via the rear face (9) of the crystal, the optical indices of which are respectively $n_s$ and $n_c$ at the signal $f_s$ and complementary $f_c$ frequencies, the crystal being wedged with its rear face (9) inclined along a non zero angle α with respect to a direction $x$ orthogonal to the direction $z$ of propagation of the radiations in the plane $xz$ formed by the directions x and y.

   **characterised in that** the crystal (7) is moveable in translation in the plane $xz$ along a direction inclined by a non zero angle β with respect to the direction $x$ such that $$tg\beta = \frac{\left(n_c - 1\right) + R \cdot \left(n_s - 1\right)}{R} tg\alpha, \quad \text{with } R = \left(\frac{f_s}{f_c} \frac{l_c}{l_s}\right),$$

   to modify simultaneously the respective optical lengths $l_s$ and $l_c$ of the first and second resonant cavities in a ratio such that the double resonance for a single pair of longitudinal signal and complementary modes is maintained, and as a result the values of the frequencies $f_s$ and $f_c$ are continuously tunable over a wide range.

2. Optical parametric oscillator according to claim 1, **characterised in that** the non-linear crystal comprises periodic inversion domains traversed successively by the radiations along the direction z making it possible to operate in quasi-phase matching.

3. Optical parametric oscillator according to claim 2, **characterised in that** the rear face (9) of the last periodic domain (15) traversed before reflection on the achromatic mirror (2) is oriented along a plane which intersects the plane xy along a straight line parallel to the direction y, and as a result the relative phase value ΔΦ between the waves of the radiation is maintained whatever the position of the crystal in the direction x.

4. Parametric oscillator according to claim 2, **characterised in that** the periodicity of the inversion domains of the crystal varies continuously in the direction x.

5. Parametric oscillator according to claim 4, **characterised in that** the variation in the periodicity along the direction x is such that the maximum of the parametric gain curve shifts in a synchronous manner with the double resonance, ratio of the signal and complementary cavities.

6. Optical parametric oscillator according to claim 4, **characterised in that** the rear face (9) of the last periodic domain (15) is polished so that it forms an angle $\gamma$ with respect to the direction $y$ in any section along a plane parallel to the plane $yz$, and as a result the phase value $\Delta\Phi$ relative to the return between the waves of the radiations may be adjusted by modification of the position along the direction $y$ of the crystal in the optical cavity.

7. Parametric oscillator according to claim 1, **characterised in that** the frequency of the pump laser is tunable and, as a result, it is possible to compensate the optical dispersion of the crystal and the variation in the optical lengths of the cavities, to obtain a continuous tuning over a very wide frequency range.

8. Parametric oscillator according to claim 2, **characterised in that** the first domain is of variable optical length via the application of an electric field and as a result it is possible to compensate the optical dispersion of the crystal and the variation in the optical lengths of the cavities to obtain continuous tuning over a very wide frequency range.

9. Parametric oscillator according to claim 8, **characterised in that** the complementary radiation wave is polarised along the crystallographic axis $c$ of the crystal and the signal and pump waves of the radiation are polarised orthogonally to this axis $c$ oriented along the direction $y$, an electric field is applied to the first domain along the axis $c$ to adjust the optical length of the complementary resonant cavity in order to compensate the optical dispersion between the three radiations and the variation in the ratio $R$.

EP 2 503 387 B1

Art antérieur

**Figure 1**

Art antérieur

**Figure 2**

*ISL*

a)

b)

Art antérieur

**Figure 3**

**Figure 4**

**Figure 5**

**Figure 6**

**Figure 7**

Figure 8

**EP 2 503 387 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2902940

- EP 2007056438 W

**Littérature non-brevet citée dans la description**

- **L. E. MYERS ; R. C. ECKARDT ; M. M. FEJER ; R. L. BYER ; W. R. BOSENBERG ; J. W. PIERCE.** Quasiphasematched optical parametric oscillators in bulk periodically poled LiNbO3. *J. Opt. Soc. Amer. B,* 1995, vol. 12, 2102-2116
- **K. L. VODOPYANOV ; O. LEVI ; P. S. KUO ; T. J. PINGUET ; L. S. HARRIS ; M. M. FEJER ; B. GERARD ; L. BECOUARN ; E. LALLIER.** Optical parametric oscillation in quasi-phase-matched GaAs. *Opt. Lett.,* 2004, vol. 29 (16), 1912-1914
- **M. RAYBAUT ; A. GODARD ; R. HAÏDAR ; M. LEFEBVRE ; PH. KUPECEK ; PH. LEMASSON ; E. ROSENCHER.** Generation of mid-infrared radiation by self-difference frequency mixing in chromium-doped zinc selenide. *Opt. Lett.,* 2006, vol. 31 (2), 220-222

- **HARDY B et al.** Compact, single-frequency, doubly resonant optical parametric oscillator pumped in an achromatic phase-adapted double-pass geometry. *OPTICS LETTERS, OSA, OPTICAL SOCIETY OF AMERICA,* 01 Mars 2011, vol. 36 (5), 678-680
- **JOSEPH E SCHAAR et al.** Characterization and control of pulse shapes in a doubly resonant synchronously pumped optical parametric oscillator. *APPLIED OPTICS, OPTICAL SOCIETY OF AMERICA,* 20 Août 2010, vol. 49 (24), 4489-4493
- **A. BERROU ; M. RAYBAUT ; A. GODARD ; M. LEFEBVRE.** *Appl. Phys B,* 2010, 98